# EUROPEAN PATENT APPLICATION

(11) **EP 4 480 642 A1**
(43) Date of publication of application: **25.12.2024**
(21) Application number: 24182629.6
(22) Date of filing: 17.06.2024
(51) Int. Cl.: B25J 9/00, B25J 19/00

(54) **IMPROVED DELTA-TYPE INDUSTRIAL ROBOT COMPRISING A CONNECTING ELEMENT**

(30) Priority: 19.06.2023 IT 202300012579
(71) Applicant: Zodiac Robotics S.r.l., 20124 Milano (IT)
(72) Inventor: Pezzotta, Andrea, 22060 Cucciago (Como) (IT); Parazzoli, Diego, 20144 Milano (IT); Ottusi, Lorenzo, 20057 Assago (Milano) (IT); Cevasco, Luca, 20144 Milano (IT)
(74) Representative: Rossi, Ugo

(57) **Abstract**

A Delta-type industrial robot (1) comprising a fixed base (2), a movable platform or wrist (3) connected to the fixed base (2) by means of an articulated system arranged to be driven by motors mounted on the fixed base (2), so that the wrist (3) can move in space, the articulated system for moving the wrist (3) comprises two or more primary arms (5a, 5b, 5c) arranged to be rotatably driven by respective motors, each of said primary arm (5a, 5b, 5c) being connected, by means of one or more secondary arms (6a, 6b, 6c), to the wrist (3), the ends of the secondary arms (6a, 6b, 6c) being connected by means of joints to the primary arms (5a, 5b, 5c) and to the wrist (3), an auxiliary device mounted in the secondary arm (6a, 6b, 6c) or in the wrist (3), at least one pneumatic and/or hydraulic and/or oleodynamic and/or electric and/or optical and/or solids conveying and/or dust conveying connection line (21, 28) for the auxiliary device, wherein the connection line (21, 28) is subdivided into a first line portion extending in correspondence with at least one of the primary arms (5a, 5b, 5c) and in a second line portion extending in correspondence of at least one secondary arm (6a, 6b, 6c), the robot (1) comprises a first connecting element or link (7, 8, 9, 10) configured to removably connect the first portion of the connection line (21, 28) with the second portion.

## Description

### SCOPE OF APPLICATION

The present invention concerns the technical field of industrial robots for moving and positioning objects in space.

In particular, the present invention refers to a robot with Delta geometry (parallel kinematic mechanism with two or more degrees of freedom) for the operations of gripping, manipulation, positioning and assembling small to medium-sized and lightweight objects, which finds application in a wide variety of manufacturing sectors such as food, cosmetic, pharmaceutical, small metal parts, palletising, packaging sector and the like.

The present invention also finds application in the field of 3D printers that use a Delta robot-like mechanics.

### PRIOR ART

Industrial robots, such as for example the Delta robot, as the one described in US patent 4,976,582, are known in the industrial sector for the gripping, manipulating and positioning of objects in space.

This robot comprises a fixed base on which two or more motors are mounted that directly or indirectly drive the respective articulated arms connected to a movable platform, commonly called a "wrist", on which one or more auxiliary devices can be mounted, such as for example gripping elements, extruders, sensors, etc. By driving the motors, the wrist is free to move in space, in particular, in a predetermined work area.

The Delta robot can have two or more degrees of freedom: two or more translations and, possibly, one or more rotations. In some cases, one or more rotations are performed by arms extending from the fixed base to the centre of the movable platform giving the end device one or more rotational degrees of freedom. In other cases, the rotational degrees of freedom available at the end of the robot ("wrist") are performed through motors or servomotors or pneumatic systems or oleodynamic systems installed at the end of the robot itself.

Each of the articulated arms consists of a primary arm, one or more secondary arms and one or more joints. The primary arm has a longitudinal development and comprises two longitudinally opposite ends, of which the first end is directly or indirectly connected to a motor and the opposite end is directly or indirectly connected to one or more secondary arms. The relative movement between the primary arm and the secondary arm(s) is obtained through one or more joints of various types (for example, rotary, prismatic, spherical, sliding, or similar). Each secondary arm has a longitudinal development, in which the first end is connected to the primary arm and the second end is in turn connected to the "wrist". The relative movement between wrist and secondary arm is obtained through one or more joints of various types (for example, rotary, prismatic, spherical, sliding or similar).

One or more auxiliary devices, for example mechanical grippers, pneumatic grippers, suction cups, extruders, sensors, Venturi tubes, solenoid valves, or the like, depending on the application of the Delta robot required, can be removably mounted on the "wrist".

The auxiliary device arranged on the "wrist" may require one or more connections for the purpose of its operation, for example pneumatic, hydraulic, oleodynamic, electrical, optical and/or solids conveying and/or dust conveying type connections (for example, the extruders of 3D printers need a connection that carries the material to be extruded). To this end, the auxiliary device is connected to the fixed base of the robot through one or more connection lines. The connection lines are used for conveying gases and/or vapours (e.g. compressed air, air being sucked to generate the vacuum etc...), liquid (e.g. compressed oil for oleodynamic grippers), solids and/or dusts (e.g. material for the extruder, abrasive dusts for a cutting head), electric current (e.g. analogue signal, digital signal, power supply current) and/or optical signal (e.g. optical fibre, laser etc...).

In order to be able to use the auxiliary device installed on the "wrist" of the robot, it is therefore necessary to provide one or more connection lines, also called utility lines, for example consisting of electrical cables, air connections, hydraulic pipes, etc... that run from the fixed base up to the device.

Usually, Delta robot manufacturers provide the robot without connection lines, which the users of such robots will take care of depending on the particular applications required.

Therefore, for both practical and commercial reasons, these utilities are made to pass from the fixed base up to reaching the "wrist" by having them run externally to the articulated arms (primary and secondary arms) to which they can possibly be constrained, for example, by means of ties and/or clamps.

The same considerations also apply to devices mounted in positions other than the "wrist" of the robot, such as for example motors positioned along one or more articulated arms.

A drawback of Delta robots of known type is due to the fact that during operation they move with accelerations that even exceed 10 g of acceleration, leading to strong vibrations that can cause failures or breakages in the connection lines mounted externally to the articulated arms.

A further drawback of Delta-type robots is due to the relatively high range of movement and/or to the type of movement itself in three-dimensional space, which can cause failures or breakages in the connection lines mounted externally to the articulated arms. For example, cables and/or pipes constrained externally to the arms may be twisted-bent due to the relative movement of the arms themselves.

Another drawback of Delta-type robots is due to the fact that, since these robots are also used in the food field, they must meet stringent requirements in terms of hygiene and compatibility with the objects to be moved or processed. Since in industrial robots of known type the connection lines run externally to the articulated arms, these lines can come into contact with the objects moved and must therefore be cleaned regularly.

In particular, in industrial robots of known type in which the connection lines run externally, dirt can accumulate in the spaces between the connection lines and the primary and/or secondary arms to which they are constrained, proving difficult to be reached for cleaning.

Another drawback of industrial robots of known type is therefore the risk that the connection lines are damaged during their cleaning.

A further drawback of industrial robots of known type is that in the event of failures or breakages of the connection line, the latter must be replaced for the entire section running from the fixed base up to reaching the wrist on which the auxiliary device is mounted. This operation of replacing or repairing the connection line therefore requires a high machine downtime with consequent high maintenance costs.

The same considerations also apply to auxiliary devices mounted in positions other than the "wrist" of the robot, such as for example motors positioned along one or more articulated arms.

The Applicant has found that the technical drawbacks highlighted above can be easily solved by means of the innovative Delta-type industrial robot proposed in the present patent application.

A first object of the present invention is to realize an industrial robot with parallel kinematics of simple construction and maintenance.

A further object of the present invention is to provide an industrial robot that allows to quickly replace possible sections of the connection line in case of breakages, leaks or failures.

Another object of the present invention is to provide an industrial robot with parallel kinematics, which makes possible a reliable cleaning of all the components, decreasing the possibility of damaging the connection lines.

A further object of the present invention is to eliminate the drawbacks of the prior art, by providing an industrial robot that is practical, versatile, efficient and adapted to ensure good freedom of movement.

Yet another object of the present invention is to provide an industrial robot that is suitable for use in the food sector.

### SUMMARY OF THE INVENTION

These and other purposes are achieved in accordance with the invention, with the features listed in the attached independent claim.

Advantageous embodiments of the invention appear from the dependent claims.

A first object of the present invention consists in an industrial robot comprising:
- a fixed base,
- a movable platform or wrist connected to the fixed base by means of an articulated system arranged to be driven directly or indirectly by motors mounted on the fixed base, so that the wrist can move in space,
- said articulated system for moving the wrist comprises two or more primary arms arranged to be rotatably driven by respective motors and connected, by means of one or more secondary arms to said wrist, the ends of said secondary arms being connected by means of joints to said primary arms and to said wrist,
- an auxiliary device mounted in said secondary arm or in said wrist,
- at least one connection line which is pneumatic and/or hydraulic and/or oleodynamic and/or electric and/or optical and/or solids conveying and/or dust conveying for said auxiliary device,
characterised in that:
- at least one of said primary arms has a first cavity,
- said connection line is partially housed within said first cavity.

The Delta-type industrial robot according to the present invention enables increased reliability and maintenance.

In particular, it allows to speed up the operations of replacement of portions of the connection line in the event of breakage, leaks or failures, allowing to replace only the portions of the connection line that are mostly exposed to potential breakages and failures.

The Delta-type industrial robot according to the present invention also allows easy cleaning of the primary and secondary arms, decreasing the risk of any breakages or failures of the connection lines.

The Delta-type industrial robot according to the present invention allows to decrease the possibility of failures or breakages of the various connection lines due to high vibrations and/or movement to which the articulated arms and/or wrist are subject.

The Delta-type industrial robot according to the present invention allows to have one or more connection lines that do not hinder the movements of the industrial robot during operation.

The Delta-type industrial robot according to the present invention can be configured by choosing how many and what types of connection lines are installed.

The Delta-type industrial robot according to the present invention allows to change the configuration and arrangement of the connection lines mounted even to robots already installed and even after a period of operation.

These and further advantages of the Delta-type industrial robot in accordance with the invention will be more clearly highlighted in the following description of embodiments with reference to the accompanying figures.

### BRIEF DESCRIPTION OF THE DRAWINGS

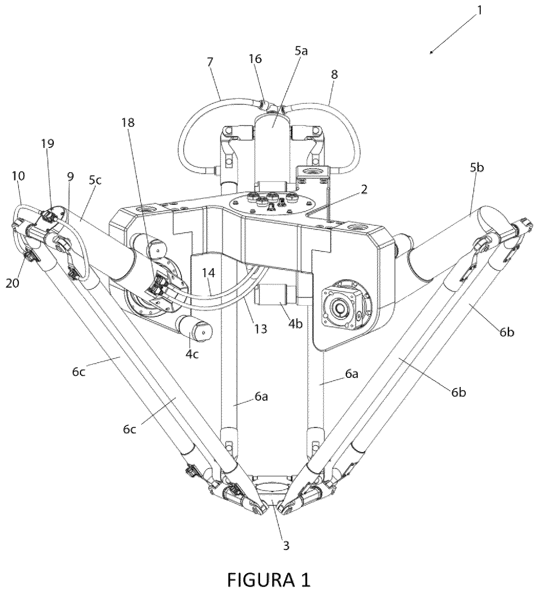

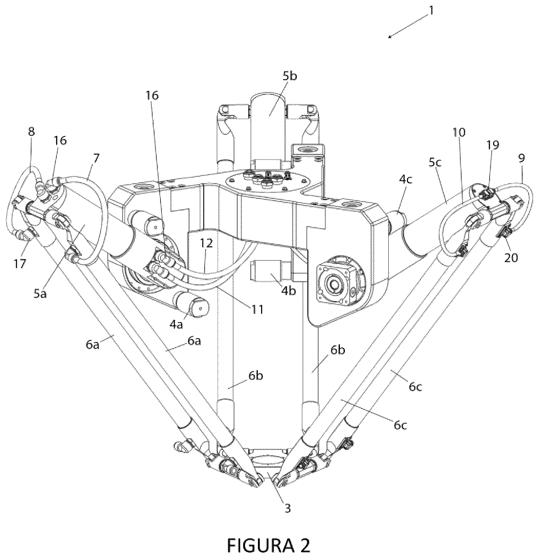

The Delta-type industrial robot according to the present invention will now be described in detail with reference to the attached figures 1 to 11, which are to be considered only by way of non-limiting example of the object of the present patent application.
Fig. 1 is a perspective view, illustrating the industrial robot according to the invention;
Fig. 2 is a second perspective view of the robot of figure 1;
Figs. 3 and 4 show enlarged details of the secondary arm of Fig. 1, in the embodiment of an electrical connection line according to the invention;
Figs. 5 and 6 show enlarged details of the primary arm of Fig. 1, in the embodiment of an electrical connection line according to the invention;
Figs. 7 and 8 show enlarged details of the secondary arm of Fig. 1, in the embodiment of a pneumatic connection line according to the invention;
Figs. 9, 10 and 11 show enlarged details of the primary arm of Fig. 1, in the embodiment of a pneumatic connection line according to the invention.

### DETAILED DESCRIPTION

With the aid of the figures, the Delta-type industrial robot is described according to the invention, indicated overall with the reference number 1.

The industrial robot 1 comprises a fixed base 2, positioned above, a movable platform or wrist 3, positioned below, connected to the fixed base 2 by means of an articulated system arranged to be driven by motors through reducers mounted on the fixed base 2, so that the wrist 3 can move in space, in a predetermined work area, and on which one or more auxiliary devices can be mounted. The auxiliary devices can be mounted on the wrist 3 and/or on the articulated system, for example on the secondary arms.

The articulated system for moving the wrist 3 comprises three primary arms or cranks 5a, 5b, 5c rotatably driven by respective motors and connected, by means of pairs of secondary arms or connecting rods 6a, 6b, 6c to said wrist 3, the ends of said pairs of secondary arms 6a, 6b, 6c being connected by means of joints to the primary arms 5a, 5b, 5c and to the wrist 3.

Advantageously, at least one of the three primary arms 5a, 5b, 5c has a first cavity and/or at least one secondary arm of one of said pairs of secondary arms 6a, 6b, 6c has a second cavity.

The robot 1 according to the present invention comprises at least one connection line 21, 28 which is pneumatic and/or hydraulic and/or oleodynamic and/or electric and/or optical and/or for solids conveying and/or for dust conveying for the one or more said auxiliary devices. The connection line 21, 28 is partially housed within the primary arm 5a, 5b, 5c, within said first cavity, and/or partially housed within at least one secondary arm 6a, 6b, 6c, in connection with the primary arm comprising the first cavity, in said second cavity.

In this way, the connection line 21, 28 runs from the fixed base 2 of the robot and/or from another position external to the robot 1 up to reaching the wrist 3 and/or up to an intermediate position on the articulated system and is partially housed within at least one primary arm 5a, 5b, 5c and/or at least one secondary arm 6a, 6b, 6c.

Preferably, the first cavity and the second cavity are each a continuous cavity extending longitudinally between the two longitudinal ends of the primary arm 5a, 5b, 5c and of the at least one secondary arm of one of said pairs of secondary arms 6a, 6b, 6c. In other words, the primary arm 5a, 5b, 5c and the at least one secondary arm of one of said pairs of secondary arms 6a, 6b, 6c has a tubular shape, hollow therein, configured to house therein at least a portion of the connection line 21, 28.

The primary arm 5a, 5b, 5c and the at least one secondary arm of one of said pairs of secondary arms 6a, 6b, 6c that are internally hollow, have at the ends of the hollow tubular shape at least one connector 16, 19 configured to let the connection line 21, 28 pass without interruptions.

Advantageously, the connection line which is pneumatic and/or hydraulic and/or oleodynamic and/or electrical and/or optical and/or for solids conveying and/or for dust conveying 21, 28 is housed within the hollow tubular shape fixed with a support element interposed between the connection line 21, 28 and the internal walls of the tubular shape.

In particular, the support element develops longitudinally, along an axis substantially parallel to the longitudinal axis of the primary arm and of the secondary arm, and has a diameter substantially equal to the inner diameter of the primary arm and/or of the hollow secondary arm. The connection line 21, 28 is inserted inside the support element, along its longitudinal axis, in a substantially central area.

Preferably, the support element consists of a low-density material in a central area thereof and of a high-density material at the ends. The density of the support material may vary depending on the diameters and weights of the connection line 21, 28.

The support element may not completely fill the cavity of the arms 5a, 5b, 5c, 6a, 6b, 6c and be distributed longitudinally so as to achieve the best compromise between the overall weight of the arms 5a, 5b, 5c, 6a, 6b, 6c and the stability of the connection line 21, 28.

The presence of the support element makes it possible to hold the connection line steady and to preserve it from the strong vibrations that are generated during the operation of the industrial robot.

The low-density central area of the support element enables the support of the connection line and at the same time it serves to keep the support itself light.

The presence of two high-density areas at the ends of the support element allows a better sealing of the connection line in correspondence with the connectors (usually more stressed during the operation of the robot).

Advantageously, the support element consists of a plurality of adj acent rings 23, 24, 25, 26 in polyurethane foam.

The support element comprises a longitudinal opening that runs through it entirely along its length, configured to insert and accommodate the connection line 21, 28 in a central position, inside it.

Preferably, inside the primary arm 5a, 5b, 5c and/or inside the at least one secondary arm of one of said pairs of secondary arms 6a, 6b, 6c, comprising said hollow tubular shape, there are one or more support elements as described above preferably arranged in correspondence with the inlet/outlet connectors 16, 19a, 19b of the connection line 21, 28, placed at the ends of the primary arm and/or of the secondary arm.

The pneumatic connection line consists of a tubular element 28 inside which air flows or a vacuum can be created.

Preferably, inside the cavity of said primary arm 5a, 5b, 5c at least two connection lines 21, 28 are housed, each of which can continue towards the wrist 3 and is housed within each secondary arm of the pair of secondary arms 6a, 6b, 6c.

The primary arms 5a, 5b, 5c and the pairs of secondary arms 6a, 6b, 6c may have a cylindrical or polygonal section.

Preferably, the primary arms 5a, 5b, 5c and the pairs of secondary arms 6a, 6b, 6c are made of metallic material or of carbon or of plastic material or a combination thereof.

Preferably, the connection lines 21 are made of tubes of aluminium or of carbon or of plastic material, either rigid or flexible.

In this way, although they are lightweight, they offer a certain rigidity.

The primary arm 5a, 5b, 5c and/or the at least one secondary arm of one of the pairs of secondary arms 6a, 6b, 6c that are internally hollow comprises a valve element configured to selectively vent outwards any air overpressure present inside. In particular, the pneumatic connection lines may be subject to air leaks inside the primary arm and/or the secondary arm in which they are housed. Such leaks may result in breakages and/or explosions of the primary arm or secondary arm itself.

In a non-limiting embodiment, such valves are a cap, held steady by a tie, so that in the event of any overpressures being vented, it prevents the little cap from ending up in the products processed by the industrial robot.

In a non-limiting embodiment, such caps may possibly be rearranged in their seat from the outside and/or may not be pushed too far inside so as to invalidate their operation.

Advantageously, the diameter of the valve element is equal to the diameter of the air conducting tube 28.

A second embodiment of the present invention provides for the presence of a first connecting element or link 7, 8, 9, 10 configured to continuously connect said connection line 21, 28 included within the first cavity (present in the primary arm) with the portion of connection line 21, 28 included within the second cavity (present in the secondary arm).

Advantageously, the first connecting element 7, 8, 9, 10 comprises, in at least one of its two opposite ends, a connector 16, 19 configured to removably connect to a corresponding connector 16, 19 present, respectively, in an end of the primary arm 5a, 5b, 5c and/or of the at least one secondary arm of one of said pairs of secondary arms 6a, 6b, 6c comprising the hollow tubular shape.

Advantageously, the industrial robot 1 comprises a second connecting element or link 11, 12, 13, 14 configured to continuously connect the connection line 21, 28 between the fixed base 2 with the interior of the first cavity, included within the primary arm 5a, 5b, 5c.

The industrial robot 1 advantageously comprises a third connecting element or link (not shown in the attached figures) configured to continuously connect the connection line 21, 28 between said second cavity included within said at least one secondary arm of one of the pair of secondary arms 6a, 6b, 6c and the one or more auxiliary devices mounted on the wrist 3.

In this way, the connection line is subdivided into three connecting elements and two portions housed firmly within the primary arm 5a, 5b, 5c and the secondary arm 6a, 6b, 6c.

This subdivision of the connection line 21, 28 is for exemplary purpose and is not binding, as it can be used even only partially.

For example, it is possible to take advantage of the connecting elements 13, 14 and of the portions housed within the primary arm 5a, 5b, 5c, to connect to auxiliary devices placed on a secondary arm 6a, 6b, 6c, without taking advantage of the other elements that make up the connection line.

For example, it is possible to take advantage of the portions housed within the secondary arm 6a, 6b, 6c and of the connecting elements (not shown in the attached figures) to connect to one or more auxiliary devices mounted on the wrist 3, without taking advantage of the other elements that make up the connection line.

Each connecting element 7, 8, 9, 10, 11, 12 is external to the various elements that make up the industrial robot 1 (i.e. fixed base 2, primary arm 5a, 5b, 5c, secondary arm 6a, 6b, 6c and wrist 3) and can be quickly replaced in the event of breakage and/or failure. Preferably, each connecting element is placed in correspondence with the connection joints.

Preferably, two connection lines 21, 28 are housed within the primary arm 5a, 5b, 5c, each of which then continues towards the cavity of a corresponding secondary arm 6a, 6b, 6c to which it is continuously connected by the first connecting element 7, 8, 9, 10.

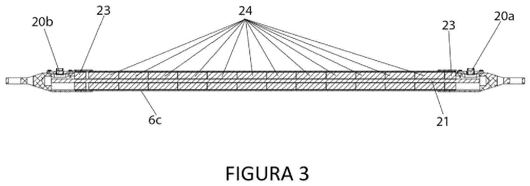

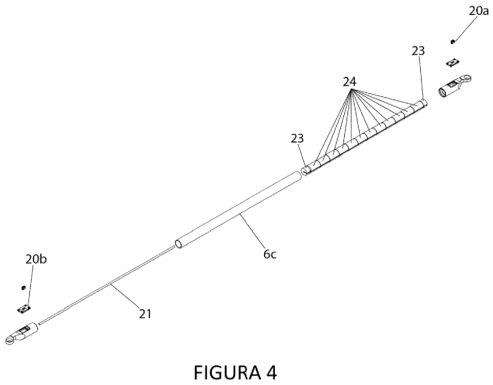

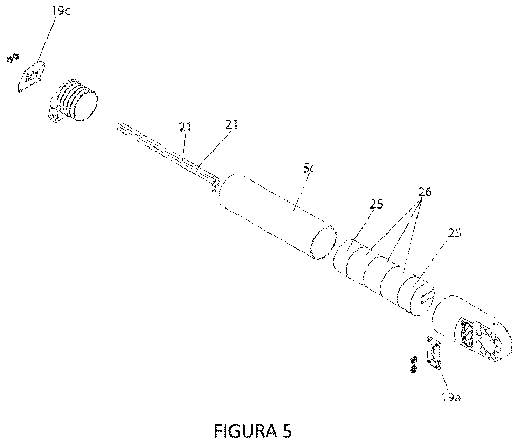

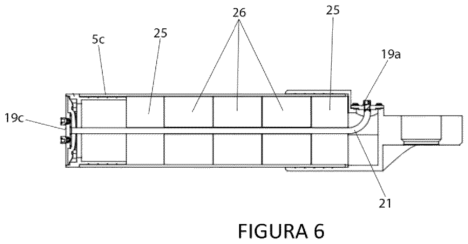

A first embodiment of the present invention, relating to the electrical connection line 21, is shown in figures 3 to 6.

In this case, the support element houses therein the electrical cable and the various connectors 19a, 19b are configured to continuously connect the electrical signal between the various elements that make up the robot 1 (fixed base 2, primary arm 5a, 5b, 5c, secondary arm 6a, 6b, 6c and wrist 3). Within at least one primary arm 5a, 5b, 5c, there will preferably be two electrical cables 21 in input through two connectors, from a first end adjacent to the fixed base 2. In correspondence with the second end of the primary arm, longitudinally opposite to said first end and near a first end of a pair of secondary arms 6a, 6b, 6c, the electrical cable 21 will be connected to two other respective electrical connectors 21. An external connection portion 9, 10 for each of the two electrical cables 21 that are housed within the primary arm will continuously connect the electrical signal between the second end of the primary arm and the first end of a secondary arm. In this way, the two electrical cables 21 present within the primary arm are electrically connected respectively to each secondary arm of the pair of secondary arms to which the primary arm is connected with a joint. Similarly, each electrical cable 21 running internally to each secondary arm will terminate near the second end of each secondary arm, in two electrical connectors (one for each secondary arm).

In this way, a third external electrical connection portion will connect each electrical connection line between the lower electrical connector and the one or more auxiliary devices mounted on the wrist.

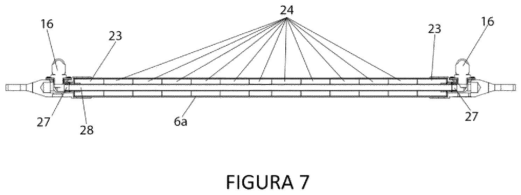

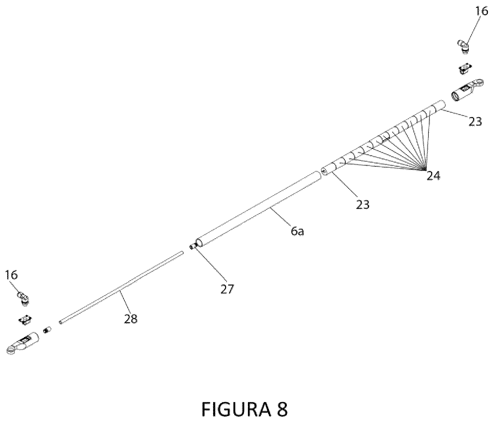

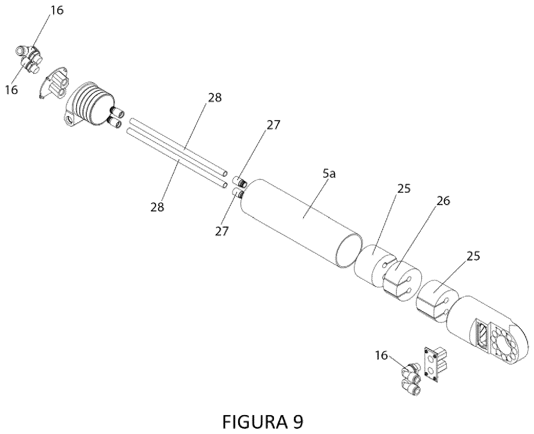

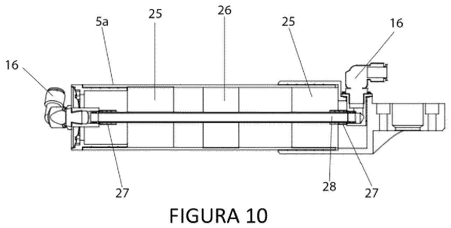

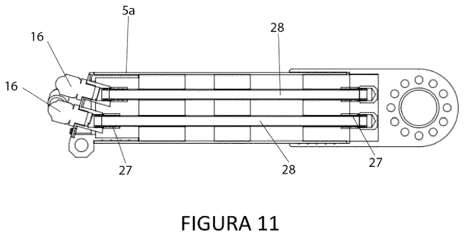

A second embodiment of the present invention, relating to the pneumatic connection line 28, is shown in figures 7 to 11.

In this case, the support element houses therein a tubular element 28 of suitable diameter for compressed air or for creating the vacuum. The connectors 16 are configured to continuously connect air or vacuum between the various elements that make up the robot 1 (fixed base 2, primary arm 5a, 5b, 5c, secondary arm 6a, 6b, 6c and wrist 3). Within at least one primary arm 5a, 5b, 5c, there will preferably be two tubular elements 28 in input through two connectors 16, from a first end adjacent to the fixed base 2. At the opposite ends of each tubular element 28, near each connector 16, there is a sealing element 27.

In correspondence with the second end of the primary arm, longitudinally opposite to said first end and near a first end of a pair of secondary arms 6a, 6b, 6c, the tubular element 28 will be connected to two other respective pneumatic connectors 28. An external connection portion 7, 8 for each of the two tubular elements 28 that are housed within the primary arm, will continuously connect the pneumatic flow (i.e. compressed air or vacuum) between the second end of the primary arm and the first end of a secondary arm. In this way, the two tubular elements 28 present within the primary arm are pneumatically connected respectively to each secondary arm of the pair of secondary arms to which the primary arm is connected with a joint. Similarly, each tubular element 28 running internally to each secondary arm will terminate near the second end of each secondary arm, in two pneumatic connectors (one for each secondary arm).

In this way, a third external electrical connection portion will connect each pneumatic connection line between the pneumatic connector on the lower end of the connecting rod and the one or more auxiliary devices mounted on the wrist.

In the embodiment in which the connection line is a pneumatic line 28, the tubular elements 28 for the passage of air or vacuum have the same diameter in all the various portions present from the fixed base 2 up to the wrist 3.

Preferably, the primary arm 5a, 5b, 5c, may have an outer diameter from 10 to 120 mm and an inner diameter from 5 to 118 mm.

Preferably, the secondary arm 6a, 6b, 6c may have an outer diameter from 4 to 60 mm and an inner diameter from 1 to 58 mm.

The tube 28 may have an outer diameter from 3 to 50 mm and an inner diameter from 2 to 48 mm.

In a variant of the invention, the connection line 21, 28 is inserted within the primary arm and the secondary arm forming "a curl". In this way, any twists of the arms of the robot 1 are advantageously transformed into a bending.

Non-limiting examples of auxiliary devices that are removably mountable on the "wrist" 3 of the robot 1 comprise: a mechanical gripper, a suction cup, multiples of suction cups, an extruder (3D printer), optical devices for reflection and conduction of light rays, a cutting blade, multiples of cutting blades, a water jet for cutting or engraving operations, a laser head for cutting, engraving ablation, one or a multiplicity of tools for grinding, polishing, cleaning, one or a multiplicity of spindles with mounted a tool for chip removal, a quick change system to hook several tools or bits or tools adapted to perform the process necessary for the user of the robot.

Further examples of auxiliary devices comprise: Venturi tube, solenoid valves, proximity sensors, force sensors, rotary encoders, linear encoders, pneumatic grippers, linear and/or rotary electric actuators, linear and/or rotary pneumatic actuators, linear and/or rotary hydraulic actuators, cams, linear and/or rotary electromagnetic actuators, grippers, robotic hands.

The presence of the cavities in the primary arm and in the pair of secondary arms of the industrial robot according to the present invention allows to guide and protect the connection lines from the fixed base of the robot up to reaching the wrist, both entirely and partially. In this way, the connection lines are protected on the one hand from contamination and dirt and on the other from failures or breakages.

In addition, the presence of the external connection portions allows, at the points more subject to failures or breakages, to be able to quickly replace the damaged connection line portion.

It is clear that the specific features are described in relation to different embodiments of the invention by way of non-limiting example.

The person skilled in the art will obviously be able to introduce further modifications and variants of the present invention with the aim of satisfying specific contingent needs. For example, the technical features described in relation to one embodiment of the invention can be extrapolated therefrom and applied to other embodiments of the invention. Such modifications and variants, moreover, are contained within the scope of protection of the invention, as defined by the following claims.

## Claims

1. Delta-type industrial robot (1) comprising:
- a fixed base (2),
- a movable platform or wrist (3) connected to the fixed base (2) by means of an articulated system arranged to be driven by motors mounted on the fixed base (2), so that the wrist (3) can move in space,
- said articulated system for moving the wrist (3) comprises two or more primary arms (5a, 5b, 5c) arranged to be rotatably driven by respective motors, each of said primary arms (5a, 5b, 5c) being connected, by means of one or more secondary arms (6a, 6b, 6c), to said wrist (3), the ends of said secondary arms (6a, 6b, 6c) being connected by means of joints to said primary arms (5a, 5b, 5c) and to said wrist (3),
- an auxiliary device mounted in said secondary arm (6a, 6b, 6c) or in said wrist (3),
- at least one connection line (21, 28) which is pneumatic and/or hydraulic and/or oleodynamic and/or electric and/or optical and/or solids conveying and/or dust conveying for said auxiliary device,
**characterised in that**:
- said connection line (21, 28) is subdivided into a first line portion extending in correspondence with at least one of the primary arms (5a, 5b, 5c) and a second line portion extending in correspondence of at least one secondary arm (6a, 6b, 6c);
- said robot (1) comprises a first connecting element or link (7, 8, 9, 10) configured to removably continuously connect the first portion of said connecting line (21, 28) with the second portion of said connecting line (21, 28).

2. Industrial robot (1) according to claim 1, **characterised in that**:
- at least one of said primary arms (5a, 5b, 5c) comprises a first cavity and/or at least one secondary arm (6a, 6b, 6c), in connection with said primary arm (5a, 5b, 5c), comprises a second cavity,
- said at least one pneumatic and/or hydraulic and/or oleodynamic and/or electric and/or optical and/or solids conveying and/or dust conveying connection line (21, 28) being partially housed within said first cavity and/or within said second cavity.

3. Industrial robot (1) according to claim 2, **characterized in that** said primary arm (5a, 5b, 5c) and/or said at least one secondary arm (6a, 6b, 6c) has a hollow tubular shape within it configured to accommodate within it a portion of said connection line (21, 28).

4. Industrial robot (1) according to claim 3, **characterised in that** said first connecting element (7, 8, 9, 10) comprises, in at least one of its two opposite ends, a connector (16, 19a, 19b) configured to removably connect to a corresponding connector (16, 19a, 19b) present, respectively, in an end of said primary arm (5a, 5b, 5c) and/or in an end of said at least one secondary arm (6a, 6b, 6c) comprising said hollow tubular shape.

5. Industrial robot (1) according to any one of the preceding claims, **characterised in that** it comprises a second connection element or link (11, 12, 13, 14) configured to continuously connect said connection line (21, 28) from said fixed base (2) with the interior of said first cavity included within said primary arm (5a, 5b, 5c).

6. Industrial robot (1) according to any one of the preceding claims, **characterised in that** it comprises a third connection element or link configured to continuously connect said connection line (21, 28) between said second cavity, included within said at least one secondary arm (6a, 6b, 6c), and the one or more auxiliary devices placed on the wrist (3).

7. Industrial robot (1) according to any one of the preceding claims 4 to 6, **characterised in that**, when said connection line (28) is of a pneumatic type, said at least one connector is a 90 degree connector comprising internal bearings.

8. Industrial robot (1) according to any one of the preceding claims 3 to 7, **characterised in that** said pneumatic and/or hydraulic and/or oleodynamic and/or electrical and/or optical and/or solids and/or dust conveying connection line (21, 28) is housed within said hollow tubular shape with a support element interposed between said connection line (21, 28) and the internal walls of said tubular shape.

9. Industrial robot (1) according to claim 8, **characterised in that** said support element extends longitudinally and preferably comprises a low-density material in a central area and a high density material at the ends.

10. Industrial robot (1) according to any one of the preceding claims, **characterised in that** said primary arm (5a, 5b, 5c) and/or said at least one secondary arm (6a, 6b, 6c) comprising said hollow tubular shape comprises a valve element configured to selectively vent outwards any air overpressure present inside.
